# EUROPEAN PATENT APPLICATION

(11) **EP 2 790 109 A1**
(43) Date of publication of application: **15.10.2014**
(21) Application number: 14161073.3
(22) Date of filing: 21.03.2014
(51) Int. Cl.: G06F 13/38, H04L 12/801, H04L 12/933

(54) **Switching device, packet control method, and data communication system**

(30) Priority: 09.04.2013 JP 2013081634
(71) Applicant: FUJITSU LIMITED, Kawasaki-shi, Kanagawa 211-8588 (JP)
(72) Inventor: Maeda, Koichi, Kanagawa, 211-8588 (JP); Kuramoto, Masahiro, Kanagawa, 211-8588 (JP)
(74) Representative: HOFFMANN EITLE

(57) **Abstract**

A header attaching unit 24 attaches, for each destination of a plurality of packets, a number to each of the packets. The packets have a plurality of types. Furthermore, the header attaching unit 25 sends the packets, to each of which the number is attached, via one of virtual channels in accordance with the types of the packets. Furthermore, an accumulation buffer 41 receives packets sent from an arbitrating unit 23 and accumulates the packets. An arbitrating unit 44 and a management ID control unit 43 determine, on the basis of the number, whether a specific type of packet is allowed to be output, decide the order the packets are output, and output the packets from the accumulation buffer 41.

## Description

### FIELD

The embodiments discussed herein are related to a switching device, a packet control method, and a data communication system.

### BACKGROUND

Computing machines include input/output (I/O) buses. Examples of typically used I/O buses include peripheral component interconnect (PCI) (registered trademark) buses, PCIe (PCI Express) (registered trademark) buses, or the like. The PCIe is a bus standard designed to connect devices developed by the PCI-special interest group (SIG). PCIe buses perform data processing more efficiently than PCI buses. In particular, in recent years, with the development of broadband and digital media, PCIe devices are increasingly used in response to a request for large volume of data to be handled in each system in a short time.

In the PCIe standard, communication is performed in packet units. For packets conforming to the PCIe standard, there is ordering constraint between packets.

Furthermore, there is a proposed technology that encapsulates a PCIe packet and sends the packet via a switch that is operated by a protocol different from the protocol that is used by the PCIe device. Consequently, a large number of PCIe devices can be connected to a computing machine.

With such a system in which a PCIe packet is encapsulated, communication that uses a protocol different from the protocol that is used by the PCIe technology is present on a communication path. An issued PCIe packet needs to conform to the ordering constraint; however, in another protocol, a circuit conforming to the ordering constraint of the PCIe standard is not possibly be installed.

Consequently, in order to obey the ordering constraint, there is a proposed technology that sends a PCIe packet through a single transmission path relayed by a first in first out (FIFO) buffer. With this technology, because overtaking does not occur between PCIe packets, communication conforming to the ordering constraint can be performed.

Furthermore, there is another technology, used to obey the communication ordering constraint, that sends packets, in each of which a monitor number that is a specific numerical sequence is attached to the header in an ATM cell, and detects an error by determining whether the packets received on the reception side are in the order of a specific numerical sequence.

Patent Document 1: Japanese Laid-open Patent Publication No. 07-30546

However, if a single transmission path is used and if a packet addressed to a certain destination stops, another packet addressed to the other destination is not also delivered and thus a deadlock may possibly occur. Furthermore, the technology that maintains the numerical sequence of monitor numbers can detect an error; however, it is difficult to receive packets while obeying the ordering constraint.

Accordingly, it is an object in one aspect of an embodiment of the invention to provide a switching device, a packet control method, and a data communication system that obeys the ordering constraint.

### SUMMARY

According to an aspect of an embodiment, a switching device includes: a number attaching unit that attaches, for each destination of a plurality of packets, a number to each of the packets in the order the packets are sent, the packets having a plurality of types; a sending unit that sends, via a plurality of paths in accordance with the types of the packets, the packets to each of which the number is attached by the number attaching unit; an accumulating unit that receives the packets sent by the sending unit and accumulates the packets; and an output unit that determines, on the basis of the number, whether a specific type of packet can be output, that decides the order the packets are output, and that outputs the packets from the accumulating unit.

### BRIEF DESCRIPTION OF DRAWINGS

FIG. 1 is a block diagram illustrating a data communication system according to a first embodiment;
FIG. 2 is a schematic diagram illustrating the transition of management IDs retained in a management ID creating unit;
FIG. 3 is a schematic diagram illustrating the header to which a management ID tag is attached;
FIG. 4 is a schematic diagram illustrating the overall flow of packet transmission performed by the data communication system according to the first embodiment;
FIG. 5 is a schematic diagram illustrating an output of a packet performed by using a management ID of a top packet and a management ID stored in a management ID retaining circuit;
FIG. 6 is a timing chart illustrating the output timing;
FIG. 7 is a schematic diagram illustrating the flow of the packet performed by the data communication system according to the first embodiment;
FIG. 8 is a flowchart illustrating the sending and receiving of a PCIe packet performed by a switch on the transmission side;
FIG. 9 is a flowchart illustrating an output of a packet performed by a switch on the reception side;
FIG. 10 is a block diagram illustrating a data communication system according to a second embodiment;
FIG. 11 is a schematic diagram illustrating the overall flow of packet transmission performed by the data communication system according to the second embodiment; and
FIG. 12 is a block diagram illustrating a data communication system according to a third embodiment.

### DESCRIPTION OF EMBODIMENTS

Preferred embodiments of the present invention will be explained with reference to accompanying drawings. The switching device, the packet control method, and the data communication system disclosed in the present invention is not limited to the embodiments described below.

### [a] First Embodiment

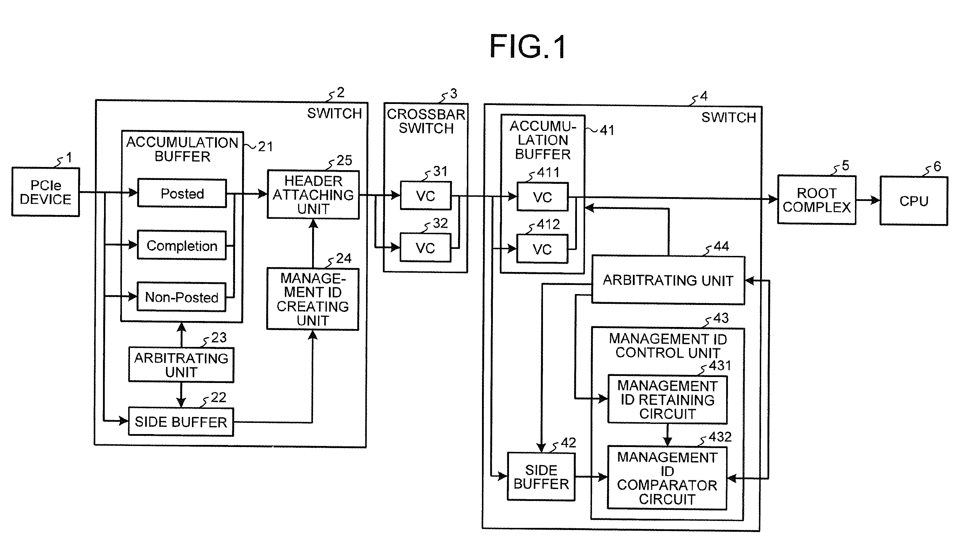

FIG. 1 is a block diagram illustrating a data communication system according to a first embodiment. As illustrated in FIG. 1, a data communication system according to a first embodiment is a system that performs data communication by using PCIe devices.

With the data communication performed by using PCIe devices, data is sent and received by using a PCIe protocol that is a protocol conforming to the PCIe standard. With PCIe protocol, communication is performed in packet units. Hereinafter, a packet that is used for a PCIe protocol is referred to as a PCIe packet. With the data communication performed by using PCIe devices, data communication is performed by using three types of packets, as PCIe packets, such as a Posted packet, a Non-Posted packet, and a Completion packet.

These three types of PCIe packets have the following ordering constraint. Namely, a Posted packet and a Completion packet may overtake a Non-Posted packet. Furthermore, a Non-Posted packet is not supposed to overtake a Posted packet nor a Completion packet. The data communication system according to the first embodiment sends and receives data while obeying this ordering constraint.

In a description below, a Posted packet is referred to as a "P packet", a Completion packet is referred to as a "C packet", and a Non-Posted packet is referred to as an "NP packet". Furthermore, when a P packet and a C packet are not distinguished but are treated as packets in one group, a P packet and a C packet are referred to as a "P/C packet". Furthermore, when these three types of packets are not distinguished, the packets are simply referred to as a "packet".

The data communication system according to the first embodiment includes, for example, a PCIe device 1, a switch 2, a crossbar switch 3, a switch 4, a root complex 5, and a central processing unit (CPU) 6.

The PCIe device 1 is a device, such as a hard disk, that conforms to the PCIe standard. The PCIe device 1 sends and receives data by using a PCIe protocol. In this embodiment, the PCIe device 1 is described as a device on the side that sends data; however, the PCIe device 1 may also be a device on the side that receives the data.

The PCIe device 1 outputs a PCIe packet to the switch 2. At this point, the PCIe device 1 outputs a P packet, a C packet, and an NP packet.

The switch 2 includes an accumulation buffer 21, a side buffer 22, an arbitrating unit 23, a management identification (ID) creating unit 24, and a header attaching unit 25.

The accumulation buffer 21 receives an input of a P packet, a C packet, and an NP packet from the PCIe device. The accumulation buffer 21 accumulates the received packets. Then, the accumulation buffer 21 sequentially outputs, to the header attaching unit 25, packets from among the retained packets in the order instructed by the arbitrating unit 23.

The side buffer 22 acquires destination information on the packets that are input to the accumulation buffer 21. Then, the side buffer 22 stores therein the acquired destination information together with identification information on the packets.

The side buffer 22 acquires, from the arbitrating unit 23, the information on a packet that is output from the accumulation buffer 21. Then, the side buffer 22 outputs, to the management ID creating unit 24, the destination information on the packet that has been output from the accumulation buffer 21.

The arbitrating unit 23 arbitrates the packets stored in the accumulation buffer 21 and determines the order the packets are output. Then, the arbitrating unit 23 notifies the accumulation buffer 21 of information on the packets that have been determined as output packets and then instructs the accumulation buffer 21 to output the packets. Furthermore, the arbitrating unit 23 notifies the side buffer 22 of information on the packets that have been determined as the output packets.

The management ID creating unit 24 includes a counter that represents a value of the management ID for each destination of a packet.

The management ID creating unit 24 receives an input of destination information on a packet from the side buffer 22. If the destination information indicates a new destination, the management ID creating unit 24 creates a counter value that is associated with the received destination information and sets the initial value. Specifically, the management ID creating unit 24 includes counters in which the initial value is set to all of the destinations. In the first embodiment, the management ID creating unit 24 sets the initial value of the counters to, for example, 1.

Then, the management ID creating unit 24 reads a value of a counter associated with the received destination information and then outputs the read value, as the management ID, to the header attaching unit 25. Thereafter, the management ID creating unit 24 increments the value of the counter associated with the received destination information by one. When the management ID creating unit 24 increments the value of the counter associated with the destination of the packet, the management ID creating unit 24 does not distinguish packets among a P packet, a C packet, and an NP packet.

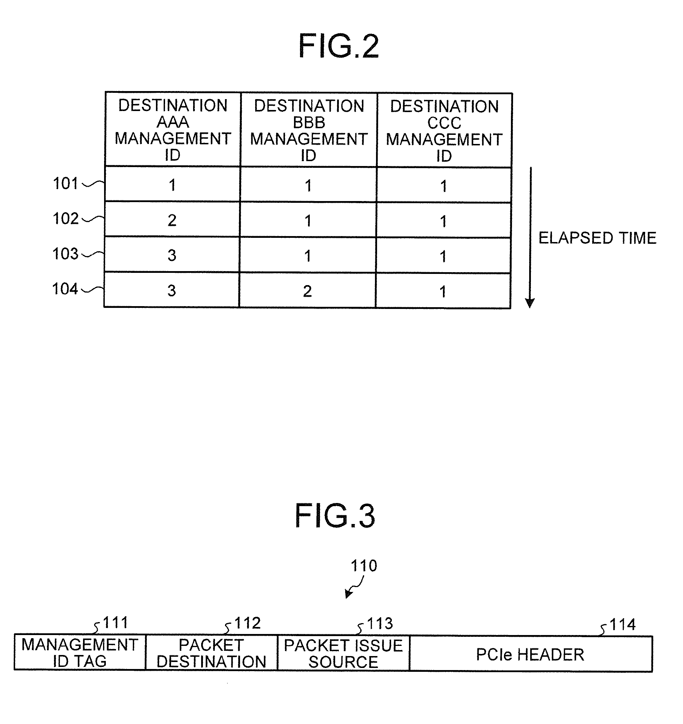

FIG. 2 is a schematic diagram illustrating the transition of management IDs retained in a management ID creating unit. In the following, a description will be given of a case in which a destination AAA, a destination BBB, and a destination CCC are present as the destinations. Each row illustrated in FIG. 2 indicates the state of the management IDs stored in the management ID creating unit 24 at each timing. Furthermore, FIG. 2 illustrates the state in which the time has elapsed in the downward direction of the table.

When a packet is not received, the management ID creating unit 24 maintains the state in which, as illustrated by a row 101, the initial value 1 is set to the counter of each destination.

When a packet for the destination AAA is output from the accumulation buffer 21, the management ID creating unit 24 receives an input of destination information on the destination AAA from the side buffer 22. Then, the management ID creating unit 24 outputs "1", which is the value of the counter of the destination AAA, as the management ID to the header attaching unit 25. Thereafter, the management ID creating unit 24 increments the counter associated with the destination AAA by one. At this point, as illustrated by a row 102 in FIG. 2, for the counters retained in the management ID creating unit 24, the value of the counter associated with the destination AAA becomes "2", whereas the value of the other counters remain "1".

Subsequently, when another packet for the destination AAA is output from the accumulation buffer 21, the management ID creating unit 24 receives an input of destination information on the destination AAA from the side buffer 22. Then, the management ID creating unit 24 outputs "2", which is the value of the counter of the destination AAA, as the management ID to the header attaching unit 25. Then, the management ID creating unit 24 increments the value of the counter associated with the destination AAA by one. At this point, as illustrated by a row 103 in FIG. 2, for the counters retained in the management ID creating unit 24, the value of the counter associated with the destination AAA becomes "3", whereas the value of the other counters remain "1".

Subsequently, when a packet for the destination BBB is output from the accumulation buffer 21, the management ID creating unit 24 receives an input of destination information on the destination BBB from the side buffer 22. Then, the management ID creating unit 24 outputs "1", which is the value of the counter of the destination BBB, as the management ID to the header attaching unit 25. Thereafter, the management ID creating unit 24 increments the value of the counter associated with the destination BBB by one. At this point, as illustrated by a row 104 in FIG. 2, for the counters retained in the management ID creating unit 24, the value of the counter associated with the destination AAA is "3", the value of the counter associated with the destination BBB is "2", and the value of the counter associated with the destination CCC is "1".

In this way, the management ID creating unit 24 creates a management ID by incrementing the value of the counter used for each destination. Then, the management ID creating unit 24 sends a notification indicating the management ID of the packet that is output to the header attaching unit 25.

A description will be given here by referring back to FIG. 1. The header attaching unit 25 receives the output packet from the accumulation buffer 21. Furthermore, the header attaching unit 25 acquires the management ID from the management ID creating unit 24. Then, the header attaching unit 25 attaches the header of the output packet to the management ID. Furthermore, the header attaching unit 25 attaches, to the header, information indicating the destination of the packet and information indicating the issue source of the packet. The header attaching unit 25 encapsulates the packet and changes the protocol different from the PCIe protocol.

FIG. 3 is a schematic diagram illustrating the header to which a management ID tag is attached. A header 110 represents the header of a packet that is output from the switch 2. The header 110 includes a management ID tag 111, a packet destination 112, a packet issue source 113, and a PCIe header 114.

The management ID tag 111 is an area that stores therein the value of the management ID attached by the header attaching unit 25. In the first embodiment, for example, the number of bits of the management ID tag 111 is 4 bits. The packet destination 112 is an area that stores therein information on the destination of a packet. In the first embodiment, for example, the number of bits of the packet destination 112 is 4 bits. The packet issue source 113 is an area that stores therein information on the issue source of a packet. In the first embodiment, for example, the number of bits of the packet issue source 113 is 4 bits. The PCIe header 114 is the header conventionally used in the PCIe standard.

In this example, an arbitrary value may be used for the size of the management ID tag 111, the packet destination 112, and the packet issue source 113 as long as they can be included in the header 110. Furthermore, by changing the size of the management ID tag 111, the packet destination 112, and the packet issue source 113, it is possible to change the number of devices that can be managed.

A description will be given here by referring back to FIG. 1. The header attaching unit 25 outputs, to the crossbar switch 3, a packet to which the header is attached.

The crossbar switch 3 is a device that performs data transfer by using a protocol that is different from the PCIe protocol. The crossbar switch 3 includes a virtual channel (VC) 31 and a virtual channel 32. The virtual channels 31 and 32 are FIFO buffers.

The virtual channel 31 is a transmission path for a P/C packet. Furthermore, the virtual channel 32 is a transmission path for an NP packet.

The crossbar switch 3 receives a packet from the switch 2. If the received packet is a P/C packet, the crossbar switch 3 transfers the packet to the switch 4 via the virtual channel 31. Furthermore, if the received packet is an NP packet, the crossbar switch 3 transfers the packet to the switch 4 via the virtual channel 32.

Because the crossbar switch 3 is a device that uses a protocol that is different from the PCIe protocol, the crossbar switch 3 does not perform the data transfer obeying the ordering constraint that conforms to the PCIe standard. Consequently, there may possibly be a case in which, due to, for example, stagnation of the P/C packet passing through the virtual channel 31, the NP packet passing through the virtual channel 32 overtakes the P/C packet. Consequently, packets are input to the switch 4 in the order that disobeys the ordering constraint.

The switch 4 includes an accumulation buffer 41, a side buffer 42, a management ID control unit 43, and an arbitrating unit 44.

The accumulation buffer 41 includes virtual channels 411 and 412. The accumulation buffer 41 sends a P/C packet, from among the packets that are input to the switch 4, to the virtual channel 411 and accumulates the P/C packet. Furthermore, the accumulation buffer 41 sends an NP packet, from among the packets that are input to the switch 4, to the virtual channel 412 and accumulates the NP packet.

Then, the accumulation buffer 41 outputs, to the root complex 5, packets, from among the retained packets, in the order instructed by the arbitrating unit 44.

The side buffer 42 includes the management ID of the top packet of each of the virtual channel 411 and the virtual channel 412. For example, the side buffer 42 sequentially acquires a management ID from the management ID tag of a P/C packet that is input to the virtual channel 411 and sequentially stores the management ID. Similarly, the side buffer 42 sequentially acquires a management ID from the management ID tag of an NP packet that is input to the virtual channel 412 and sequentially stores the management ID. Then, if a packet is output from the accumulation buffer 41, the side buffer 42 receives, from the arbitrating unit 44, information indicating which of the virtual channel 411 or 412 has output the packet. Then, the side buffer 42 deletes the top management ID from among the management IDs stored in the device on the output side of the packet. By doing so, the top management ID stored in the side buffer 42 becomes the management ID of the top packet from among the packets stored in each of the virtual channels 411 and 412.

The management ID control unit 43 includes a management ID retaining circuit 431 and a management ID comparator circuit 432.

The management ID retaining circuit 431 retains, for each destination, the management ID of the immediately previous packet. The immediately previous packet mentioned here indicates that, from among the packets that are output from the accumulation buffer 41 in the current status, the packet that has been immediately previously output to the target destination, i.e., the latest packet that has been output to the target destination. For example, the management ID retaining circuit 431 sets the initial value of the management ID for each retained destination to "0". Then, the management ID retaining circuit 431 acquires, from the arbitrating unit 44, the management ID and the destination information on the packet that has been output from the accumulation buffer 41. When the management ID retaining circuit 431 receives the management ID and the destination information from the arbitrating unit 44, the management ID retaining circuit 431 stores therein the acquired management ID as the management ID of the immediately previous packet that has been sent to the acquired destination. At this point, in the first embodiment, the management ID retaining circuit 431 stores therein the management IDs of immediately previous packets in a separate manner, i.e., the P/C packets and the NP packets. Specifically, the management ID retaining circuit 431 separately stores the management ID of an immediately previous P/C packet that has been sent to a certain destination and the management ID of an immediately previous NP packet that has been sent to a certain destination. In this example, furthermore, the management ID retaining circuit 431 stores therein information indicating whether which one of an immediately previous P/C packet and an immediately previous NP packet is subsequently sent. Then, the management ID retaining circuit 431 outputs, to the management ID comparator circuit 432 as an immediately previous packet, one of the immediately previous P/C packet and the immediately previous NP packet that is output subsequent to the packet that has been output first.

The management ID comparator circuit 432 receives, from the arbitrating unit 44, a request for determination whether an output of an NP packet is available. When the request is received, the management ID comparator circuit 432 acquires, from the side buffer 42, the management ID of the top NP packet that is stored in the virtual channel 412. Hereinafter, the management ID of the NP packet acquired from the side buffer 42 by the management ID comparator circuit 432 is referred to as the "management ID of the top NP packet". Furthermore, the management ID comparator circuit 432 acquires, from the management ID retaining circuit 431, the management ID of an immediately previous packet that has been sent to the same destination as that of the NP packet that is acquired from the side buffer.

The management ID comparator circuit 432 determines whether the value of the management ID of the top NP packet is a value obtained by adding the value of the management ID acquired from the management ID retaining circuit 431 to 1.

If a value of the management ID of the top NP packet is equal to or greater than a value obtained by adding the value of the management ID of the immediately previous packet to 1, the management ID comparator circuit 432 notifies the arbitrating unit 44 that the NP packet can be output. In contrast, a value of the management ID of the top NP packet is smaller than the value obtained by adding the value of the management ID of the immediately previous packet to 1, the management ID comparator circuit 432 notifies the arbitrating unit 44 that the NP packet is not able to be output.

The arbitrating unit 44 determines whether an NP packet is present in the virtual channel 412. If no NP packet is present, the arbitrating unit 44 outputs, from the accumulation buffer 41, a P/C packet, if any, in the virtual channel 411. Then, the arbitrating unit 44 notifies the management ID retaining circuit 431 of the destination information and the management ID of the output P/C packet. In contrast, if no P/C packet is present in the virtual channel 411, the arbitrating unit 44 waits a packet until the packet is delivered.

In contrast, if an NP packet is present, the arbitrating unit 44 requests the management ID comparator circuit 432 to determine whether an output of an NP packet can be performed. Then, the arbitrating unit 44 receives the determination result from the management ID comparator circuit 432.

If the determination result can be output, the arbitrating unit 44 outputs the NP packet from the accumulation buffer 41. Then, the arbitrating unit 44 notifies the management ID retaining circuit 431 of the destination information and the management ID of the output NP packet.

In contrast, if the determination result is not able to be output, the arbitrating unit 44 waits a packet until the packet is delivered.

The arbitrating unit 44 repeatedly determines whether a packet that is to be output described above.

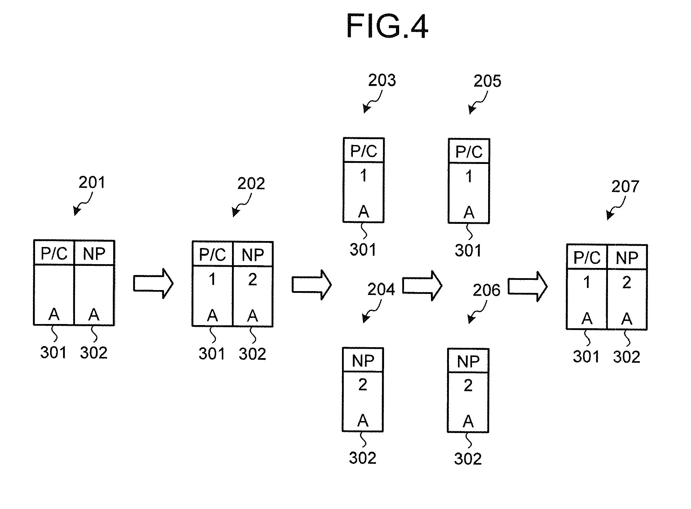

In the following, the overall flow of packet transmission performed by the data communication system according to the first embodiment will be described with reference to FIG. 4. FIG. 4 is a schematic diagram illustrating the overall flow of packet transmission performed by the data communication system according to the first embodiment. In this example, a description will be given of a case in which a packet is sent to a single destination from the PCIe device 1.

A state 201 indicates the state of the packets issued by the PCIe device 1. At this point, the symbols illustrated in the upper portion of packets 301 and 302 represent the types of packets. Furthermore, the symbol illustrated in the lower portion in the packets 301 and 302 represent the issue source ID. In the state in which a packet is issued by the PCIe device 1, the packet 301, which is a P/C packet, is located first and then the packet 302, which is an NP packet, is located subsequent to the packet 301.

A state 202 indicates the state of the packets that are output from the switch 2. In the switch 2, the header attaching unit 25 sequentially allocates the management ID to each packet. The numbers in the upper portion in the lower box in the packets 301 and 302 indicate the management ID allocated to each packet. In this example, "1" is allocated, as the management ID, to the packet 301 that is the first packet and "2" is allocated, as the management ID, to the packet 302 that is the packet subsequent to the packet 301.

A state 203 indicates the state of the packet that is passing through the virtual channel 31 in the crossbar switch 3. A state 204 indicates the state of the packet that is passing through the virtual channel 32 in the crossbar switch 3. The packet 301, which is a P/C packet, passes through the virtual channel 31. The packet 302, which is an NP packet, passes through the virtual channel 32.

A state 205 indicates the state of the packet accumulated in the virtual channel 411 in the accumulation buffer 41 in the switch 4. A state 206 indicates the state of the packet accumulated in the virtual channel 412 in the accumulation buffer 41 in the switch 4. The virtual channel 411 accumulates the packet 301 that is the P/C packet. The virtual channel 412 accumulates the packet 302 that is the NP packet.

At this point, it is assumed that, the packet 302 overtakes the packet 301 due to the state of the virtual channel 31 and the virtual channel 32 in the crossbar switch 3. Furthermore, it is assumed that the packet 302 is stored in the virtual channel 412 first and then the packet 301 is stored in the virtual channel 411.

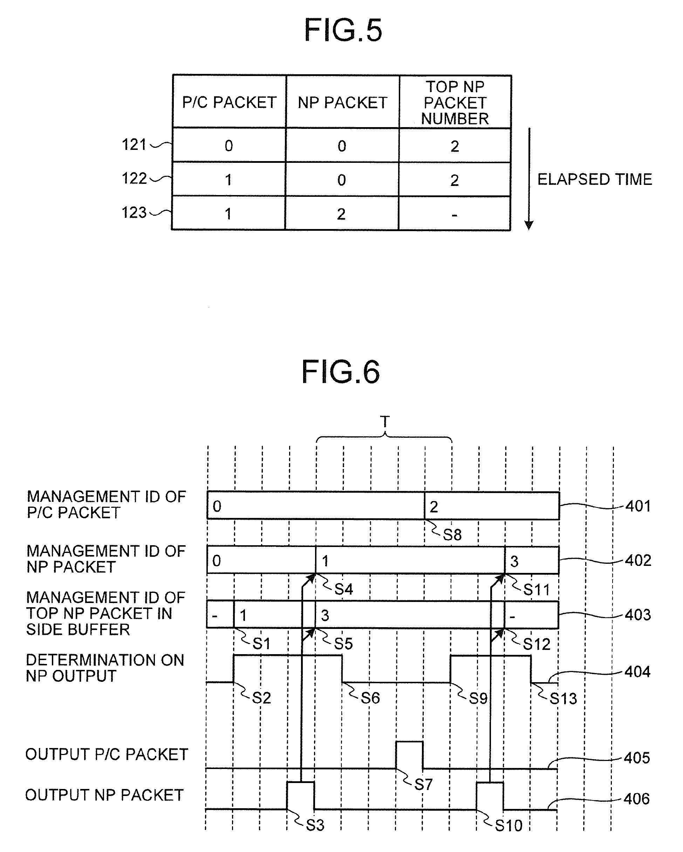

In the following, an output of the packet in the switch 4 in the states 205 and 206 illustrated in FIG. 4 will be described with reference to FIG. 5. FIG. 5 is a schematic diagram illustrating an output of a packet performed by using a management ID of a top packet and a management ID stored in a management ID retaining circuit. FIG. 5 illustrates the transition of the management ID with respect to a certain destination. In practice, the management ID retaining circuit 431 retains, for each destination, the management IDs illustrated in FIG. 5 and the management ID comparator circuit 432 determines, for each destination, whether an NP packet can be output. Each row illustrated in FIG. 5 indicates the value of the management IDs and the management ID of the top NP packet at each timing retained in the management ID retaining circuit 431. Furthermore, FIG. 5 illustrates the state in which the time has elapsed in the downward direction of the table. Furthermore, the P/C packet illustrated in FIG. 5 indicates the management ID of the immediately previous P/C packet retained in the management ID retaining circuit 431 at that time. Furthermore, the NP packet illustrated in FIG. 5 indicates the management ID of the immediately previous NP packet retained in the management ID retaining circuit 431 at that time. Furthermore, the number allocated to the top NP packet illustrated in FIG. 5 is the management ID of the top NP packet that is retained in the side buffer 42 at that time.

If a packet is not output, as illustrated by a row 121, the management ID retaining circuit 431 retains 0, which is the initial value, as the management ID of the P/C packet and the NP packet. However, because the packet 302, which is the NP packet, with the management ID of 2 is stored in the virtual channel 412, the number allocated to the top NP packet retained in the side buffer 42 is 2. Consequently, the management ID comparator circuit 432 compares a value obtained by adding 1 to 0, which is the value of the management ID of the immediately previous output packet, with 2, which is the value of the management ID of the top NP packet. In this example, because the value of the management ID of the top NP packet is smaller, the management ID comparator circuit 432 determines that the packet 302, which is an NP packet, is not able to be output.

Then, if the packet 301 that is a P/C packet and that has the management ID of 1 is stored in the virtual channel 411, the arbitrating unit 44 outputs, from the accumulation buffer 41, the packet 301 that is a P/C packet and that has the management ID of 1. The management ID retaining circuit 431 receives, from the arbitrating unit 44, "1" as the management ID of the output packet 301 and then stores the value. In this example, as illustrated by a row 122, the immediately previous packet is the packet 301, which is a P/C packet, with the management ID of 1. Consequently, the management ID comparator circuit 432 acquires, from the management ID retaining circuit 431, "1", which is the management ID of the immediately previous packet. Then, the management ID comparator circuit 432 compares the value obtained by adding 1 to 1, which is the management ID of the immediately previous packet, with 2, which is the management ID of the top NP packet. In this example, because the management ID of the top NP packet is a value obtained by adding 1, which is the management ID of the immediately previous packet, to 1, the management ID comparator circuit 432 determines that the packet 302, which is an NP packet, can be output.

In response to the determination indicating that the packet can be output, the arbitrating unit 44 outputs the packet 302 from the accumulation buffer 41. The management ID retaining circuit 431 receives, from the arbitrating unit 44, "2" as the management ID of the output NP packet. In this example, as illustrated by a row 123, the immediately previous packet is the packet 302 with the management ID of 2. Consequently, the management ID comparator circuit 432 acquires, from the management ID retaining circuit 431, "2" that is the management ID of the immediately previous packet. In this way, the management ID comparator circuit 432 determines whether an NP packet can be output.

By performing this packet output processing, as illustrated by a state 207 illustrated in FIG. 4, the switch 4 outputs the packet 301 first and then outputs the packet 302 to the root complex 5. As described above, with the data communication system according to the first embodiment, even when an NP packet overtakes a P/C packet in a divided virtual channel, it is possible to locate the NP packet, which has overtaken the P/C packet, after the P packet, which has been overtaken. Consequently, the data communication system according to the first embodiment can perform data communication while obeying the ordering constraint in the PCIe standard.

In the following, the timing of an output of a packet will be described with reference to FIG. 6. FIG. 6 is a timing chart illustrating the output timing. The horizontal axis illustrated in FIG. 6 represents the time elapsed.

A graph 401 indicates the management ID of a P/C packet included in the management ID retaining circuit 431. A graph 402 indicates the management ID of an NP packet included in the management ID retaining circuit 431. A graph 403 indicates the management ID of the top NP packet stored in the side buffer 42. A graph 404 indicates an output of the determination result of NP output determination performed by the management ID comparator circuit 432. In the graph 404, when an output is high, the NP packet can be output and when an output is low, the NP packet is not able to be output. Furthermore, a graph 405 indicates an output of a P/C packet from the switch 4 to the root complex 5. In the graph 405, when an output is high, the P/C packet is output. A graph 406 indicates an output of an NP packet from the switch 4 to the root complex 5. In the graph 406, when an output is high, the NP packet is output.

Before the packet is output, as illustrated in the graphs 401 and 402, the management ID retaining circuit 431 retains 0, which is the initial value, of the management ID of both the P/C packet and the NP packet.

Then, an NP packet with the management ID of "1" arrives at the virtual channel 412. Consequently, "1", which is the management ID of the NP packet stored in the virtual channel 412, is stored in the side buffer 42 (Step S1).

When "1" is stored in the side buffer 42 as the management ID, the management ID comparator circuit 432 acquires "1" as the management ID of the top NP packet. Furthermore, the management ID comparator circuit 432 acquires "0" from the management ID retaining circuit 431 as the management ID of the immediately previous packet. Because the management ID of "1" of the top NP packet is the value obtained by adding 1 to "0", which is the management ID of the immediately previous packet, the management ID comparator circuit 432 outputs a signal indicating that the NP packet can be output (Step S2).

In response to the signal indicating the NP packet can be output, the arbitrating unit 44 arbitrates and then outputs the NP packet from the virtual channel 412 in the accumulation buffer 41 (Step S3).

In response to the output of the NP packet, the management ID retaining circuit 431 acquires, as the management ID of the NP packet, "1" that is the management ID of the output NP packet (Step S4).

Furthermore, because the top NP packet in the virtual channel 412 has been output, the subsequent NP packet becomes the top NP packet. In this example, it is assumed that the NP packet with the management ID of "3" becomes the top NP packet in the virtual channel 412. In response to this, the side buffer 42 acquires "3" as the management ID of the top NP packet (Step S5).

At this point, the management ID comparator circuit 432 compares "3", which is the management ID of the top NP packet, with the value obtained by adding 1 to "1", which is the management ID of the immediately previous packet. In this example, because "3", which is the management ID of the top NP packet is greater than the value obtained by adding 1 to "1", which is the management ID of the immediately previous packet, the management ID comparator circuit 432 outputs a signal indicating that the NP packet is not able to be output (Step S6).

Then, the P/C packet with the management ID of "2" arrives at the virtual channel 411. In response to this, the arbitrating unit 44 arbitrates and outputs the P/C packet from the virtual channel 411 in the accumulation buffer 41 (Step S7).

In response to an output of the NP packet, the management ID retaining circuit 431 acquires "2", which is the management ID of the output P/C packet, as the management ID of the P/C packet (Step S8).

When the management ID retaining circuit 431 acquires "2", which is the management ID of the output P/C packet, the management ID comparator circuit 432 acquires "2" as the management ID of the immediately before packet. Furthermore, the management ID comparator circuit 432 acquires "3" as the management ID of the top NP packet. Because "3", which is the management ID of the top NP packet is greater than the value obtained by adding 1 to "2" that is used as the management ID of the immediately before packet, the management ID comparator circuit 432 outputs a signal indicating that the NP packet can be output (Step S9).

In response to the signal indicating that the NP packet can be output, the arbitrating unit 44 arbitrates and outputs the NP packet from the virtual channel 412 in the accumulation buffer 41 (Step S10).

In response to the output of the NP packet, the management ID retaining circuit 431 acquires "3", which is the management ID of the output NP packet, as the management ID of the NP packet (Step S11).

At this point, it is assumed that no NP packet is accumulated in the virtual channel 412. In such a case, the management ID of the NP packet retained in the side buffer 42 is deleted (Step S12).

When the management ID of the NP packet retained in the side buffer 42 is deleted, the management ID comparator circuit 432 outputs a signal indicating that the NP packet is not able to be output (Step S13).

As described above, during the time period T for which an output condition for an NP packet is not satisfied, the switch 4 does not output an NP packet even if the NP packet is present in the accumulation buffer 41. consequently, the switch 4 can obey the ordering constraint.

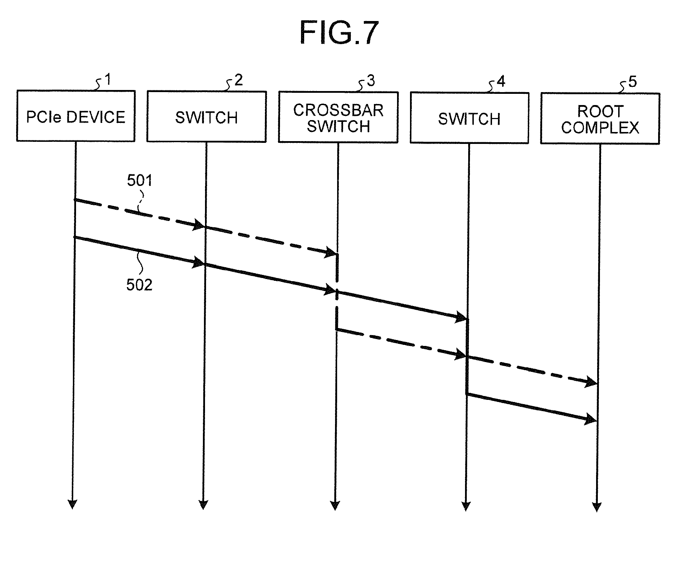

In the following, the overall output control of packets performed by the data communication system according to the first embodiment will be described with reference to FIG. 7. FIG. 7 is a schematic diagram illustrating the flow of the packet performed by the data communication system according to the first embodiment. The vertical axis illustrated in FIG. 7 represents the timing at which a packet is sent and received at each device described above. The vertical axis illustrated in FIG. 7 indicates that the time has elapsed in the downward direction. A dashed line 501 illustrated in FIG. 7 indicates the sending and receiving of a P/C packet and a solid line 502 illustrated in FIG. 7 indicates the sending and receiving of an NP packet.

The PCIe device 1 sends a P/C packet first and then sends an NP packet.

The switch 2 receives the packet that has been output from the PCIe device 1. Then, the switch 2 arbitrates, sends the P/C packet first, and then sends the NP packet while obeying the ordering constraint.

The crossbar switch 3 receives the packet that is output from the switch 2. Then, the crossbar switch 3 sequentially outputs packets that can be output. In this example, because an output of the P/C packet is stagnated, the crossbar switch 3 outputs the NP packet first and then outputs the P/C packet. Consequently, in the crossbar switch 3, the NP packet overtakes the P/C packet that is not to be overtaken and thus the ordering constraint is not obeyed.

The switch 4 receives the NP packet first that is output from the crossbar switch 3 and then receives the P/C packet. Then, the switch 4 determines whether the NP packet can be output and then outputs the P/C packet first that is supposed be output first. Then, the switch 4 outputs the NP packet.

Consequently, the root complex 5 receives the P/C packet first and then receives the NP packet. In other words, the root complex 5 can receive the PCIe packets that have been output by the PCIe device 1 in the order that obeys the ordering constraint.

As described above, a description has been given of a case in which the PCIe device 1 sends a PCIe packet to the root complex 5. However, there may be a case in which a PCIe packet is sent from the root complex 5 to the PCIe device. In such a case, the functions performed by the switch 4 and the switch 2 are replaced with each other. Specifically, the switch 4 also has the function performed by the switch 2 and the switch 2 also has the function performed by the switch 4.

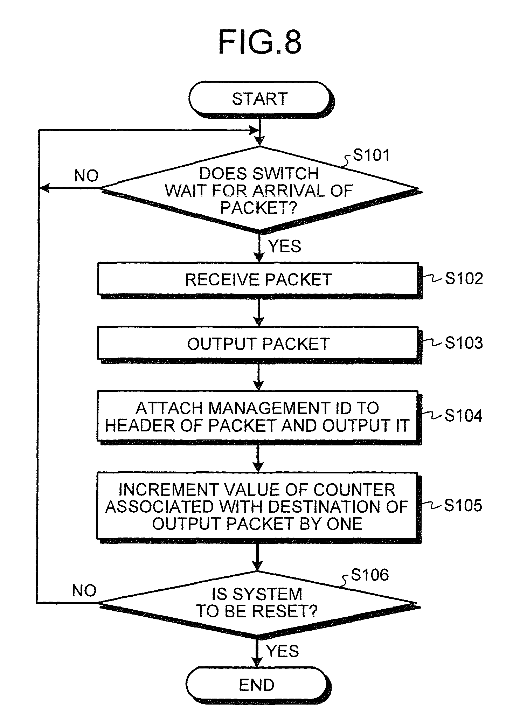

In the following, sending of a packet performed by the transmission side switch will be described with reference to FIG. 8. The transmission side switch mentioned here is a switch that is directly connected to a device on the transmission side, of a packet, in each of the PCIe device 1 and the root complex 5. For example, in FIG. 1, the transmission side switch corresponds to the switch 2. FIG. 8 is a flowchart illustrating the sending and receiving of a PCIe packet performed by a switch on the transmission side.

The switch 2 determines whether the switch 2 itself is in a wait state of a packet sent from the PCIe device 1 (Step S101). If the switch 2 is not in the wait state (No at Step S101), the switch 2 waits until the switch 2 becomes in the wait state of a packet.

In contrast, the switch 2 is in the wait state (Yes at Step S101), the switch 2 receives a packet sent from the PCIe device 1 (Step S102) and accumulates the packet in the accumulation buffer 21.

Then, the arbitrating unit 23 arbitrates the packets accumulated in the accumulation buffer 21 and then output a packet from the accumulation buffer 21 to the header attaching unit 25 in accordance with the ordering constraint (Step S103).

The management ID creating unit 24 receives, from the side buffer 22, the destination of the packet that has been output from the accumulation buffer 21. Then, the management ID creating unit 24 outputs, as the management ID to the header attaching unit 25, the value of the counter that is associated with the destination of the received packet. The header attaching unit 25 attaches the management ID, for each destination, acquired from the management ID creating unit 24 to the header of the packet that has been output from the accumulation buffer 21 (Step S104).

The management ID creating unit 24 increments the value of the counter that is associated with the destination of the output packet by one (Step S105).

Then, the arbitrating unit 23 determines whether the system is reset (Step S106). If the system has not been reset (No at Step S106), the arbitrating unit 23 returns to Step S101. In contrast, if the system has been reset (Yes at Step S106), the transmission side switch ends the process for outputting a packet.

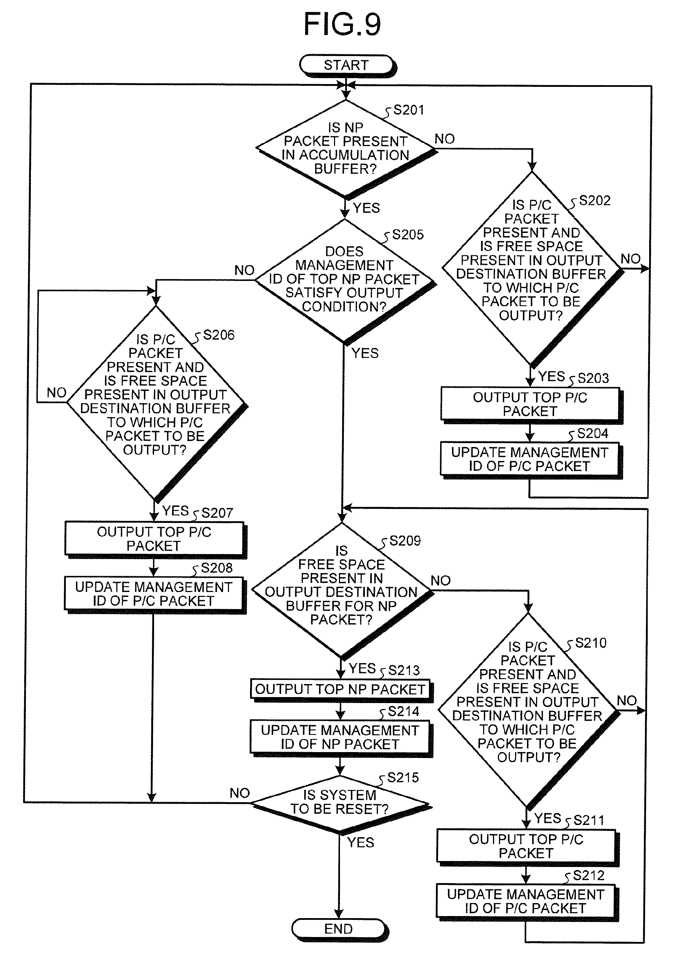

In the following, an output of a packet performed by the reception side switch will be described with reference to FIG. 9. The reception side switch mentioned here is a switch that is directly connected to a device on the reception side, of a packet, in each of the PCIe device 1 and the root complex 5. For example, in FIG. 1, the reception side switch corresponds to the switch 4. FIG. 9 is a flowchart illustrating an output of a packet performed by a switch on the reception side.

The arbitrating unit 44 determines whether an NP packet is present in the accumulation buffer 41 (Step S201). If no NP packet is present (No at Step S201), the arbitrating unit 44 determines whether a P/C packet is present in the accumulation buffer 41 and determines whether a free space is present in an output destination buffer to which the P/C packet to be output (Step S202). The output destination buffer mentioned here indicates a buffer in the root complex 5 if, for example, the switch 4 is the reception side switch.

If no P/C packet is present or if no free space is present in the output destination buffer (No at Step S202), the arbitrating unit 44 returns to Step S201.

In contrast, if a P/C packet is present and if a free space is present in the output destination buffer (Yes at Step S202), the arbitrating unit 44 outputs the top P/C packet in the virtual channel 411 from the accumulation buffer 41 (Step S203).

Then, the arbitrating unit 44 notifies the management ID retaining circuit 431 in the management ID control unit 43 of information that is related to the destination and the management ID of the output P/C packet. The management ID retaining circuit 431 updates the management ID of a P/C packet that is associated with the destination of the output P/C packet to the management ID of the output P/C packet (Step S204). Then, the arbitrating unit 44 returns to Step S201.

In contrast, if an NP packet is present (Yes at Step S201), the arbitrating unit 44 requests the management ID comparator circuit 432 to determine whether the NP packet can be output. The management ID comparator circuit 432 determines whether the management ID of the top NP packet satisfies the output condition (Step S205). Specifically, the management ID comparator circuit 432 compares the value of the management ID of the top NP packet retained in the side buffer 42 with the value obtained by adding 1 to the value of the management ID of the immediately previous packet and then determines whether the value indicated by the management ID of the top NP packet is smaller than the obtained value.

If the management ID of the top NP packet does not satisfy the output condition (No at Step S205), the arbitrating unit 44 determines whether a P/C packet is present in the accumulation buffer 41 and a free space is present in the output destination buffer for the P/C packet (Step S206). If no P/C packet is present or no free space is present in the output destination buffer (No at Step S206), the arbitrating unit 44 waits until a P/C packet is present or a free space is present in the output destination buffer.

In contrast, if a P/C packet is present and a free space is present in the output destination buffer (Yes at Step S206), the arbitrating unit 44 outputs the top P/C packet in the virtual channel 411 from the accumulation buffer 41 (Step S207).

Then, the arbitrating unit 44 notifies the management ID retaining circuit 431 in the management ID control unit 43 of information on the destination and the management ID of the output P/C packet. The management ID retaining circuit 431 updates the management ID of a P/C packet that is associated with the destination of the output P/C packet to the management ID of the P/C packet (Step S208). Then, the arbitrating unit 44 returns to Step S201.

In contrast, if the management ID of the top NP packet satisfies the output condition (Yes at Step S205), the arbitrating unit 44 determines whether a free space is present in the output destination buffer for the NP packet (Step S209). If no free space is present in the output destination buffer (No at Step S209), the arbitrating unit 44 determines whether a P/C packet is present in the accumulation buffer 41 and a free space in the output destination buffer for the P/C packet (Step S210). If no P/C packet is present or no free space is present in the output destination buffer (No at Step S210), the arbitrating unit 44 returns to Step S209.

In contrast, if a free space is present in the output destination buffer for the P/C packet (Yes at Step S210), the arbitrating unit 44 outputs the top P/C packet in the virtual channel 411 from the accumulation buffer 41 (Step S211).

Then, the arbitrating unit 44 notifies the management ID retaining circuit 431 in the management ID control unit 43 of information on the destination and the management ID of the output P/C packet. The management ID retaining circuit 431 updates the management ID of a P/C packet that is associated with the destination of the output P/C packet to the management ID of the output P/C packet (Step S212).

In contrast, if a free space is present in the output destination buffer for the NP packet (Yes at Step S209), the arbitrating unit 44 outputs the top NP packet in the virtual channel 412 from the accumulation buffer 41 (Step S213).

Then, the arbitrating unit 44 notifies the management ID retaining circuit 431 in the management ID control unit 43 of information on the destination and the management ID of the output NP packet. The management ID retaining circuit 431 updates the management ID of an NP packet associated with the destination of the output NP packet to the management ID of the output NP packet (Step S214).

Thereafter, the arbitrating unit 44 determines whether the system has been reset (Step S215). If the system has not been reset (No at Step S215), the arbitrating unit 44 returns to Step S201. In contrast, the system has been reset (Yes at Step S215), the reception side switch ends the process of outputting the packet.

As described above, with the data communication system according to the first embodiment, the transmission side switch attaches, for each destination, the management ID, which is the sequence number, to the header of a PCIe packet. Then, the PCIe packet is transferred by multiple transmission paths between a transmission side switch and a reception side switch. Consequently, the data communication system in the first embodiment, a PCIe packet can be transferred while reducing the occurrence of a deadlock.

Furthermore, the reception side switch outputs an NP packet to the destination when the management ID of the NP packet corresponds to the value that is obtained by adding 1 to the management ID of the immediately previous packet. Consequently, even if an ordering constraint violation with respect to PCIe packets have occurred during transmission of the PCIe packets, the data communication system according to the first embodiment can send the PCIe packets to the destination while obeying the ordering constraint.

### [b] Second Embodiment

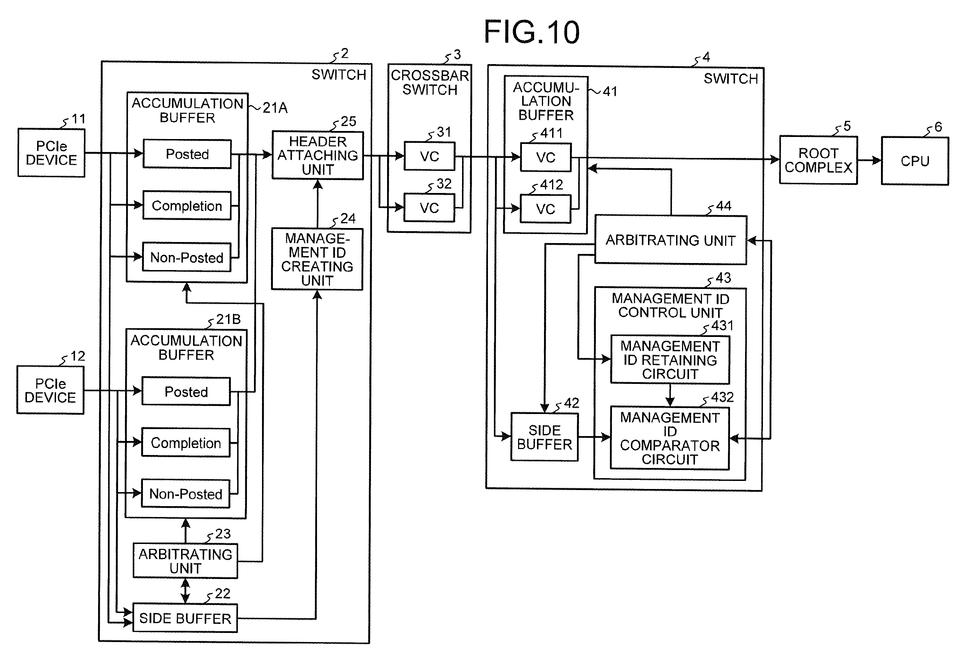

FIG. 10 is a block diagram illustrating a data communication system according to a second embodiment. A data communication system according to the second embodiment differs from the first embodiment in that multiple PCIe devices, which are on the transmission side of a PCIe packet, are arranged. In a description below, components having the same function as that performed in the first embodiment will not be described.

The data communication system according to the second embodiment includes PCIe devices 11 and 12. The PCIe devices 11 and 12 are devices both conforming to the PCIe standard. The PCIe devices 11 and 12 send and receive data by using a PCIe protocol.

The switch 2 includes two buffers, i.e., accumulation buffers 21A and 21B.

The accumulation buffer 21A sequentially receives a packet output from the PCIe device 11 and then accumulates the packet. Then, in response to an instruction received from the arbitrating unit 23, the accumulation buffer 21A outputs packets in the order that is instructed.

The accumulation buffer 21B sequentially receives a packet that is output from the PCIe device 12 and accumulates the packet. Then, in response to an instruction received from the arbitrating unit 23, the accumulation buffer 21B outputs the packets in the order that is instructed.

The side buffer 22 stores therein the issue source and the destination of each packet received by the accumulation buffers 21A and 21B by associating them with identification information on each packet. When the side buffer 22 receives, from the arbitrating unit 23, the identification information on the packet that has been output from one of the accumulation buffers 21A and 21B, the side buffer 22 outputs, to the management ID creating unit 24, information that is related to the issue source and the destination of the packet and that includes the received identification information.

The management ID creating unit 24 includes a counter for each combination of the issue source and the destination of a packet. For example, if there are three destinations, such as a destination AAA, a destination BBB, and a destination CCC, the management ID creating unit 24 includes counters, i.e., an AAA counter associated with the PCIe device 11, a BBB counter associated with the PCIe device 11, and a CCC counter associated with the PCIe device 11. Furthermore, the management ID creating unit 24 includes counters, i.e., an AAA counter associated with the PCIe device 12, a BBB counter associated with the PCIe device 12, and a CCC counter associated with the PCIe device 12.

The management ID creating unit 24 acquires, from the side buffer 22, information on the issue source and the destination of the packet that have been output from the accumulation buffer. Then, the management ID creating unit 24 outputs, as the management ID to the header attaching unit 25, the value of the counter that is associated with the acquired issue source and the destination. Thereafter, the management ID creating unit 24 increments the value of the counter associated with the combination of the issue source and the destination by one.

The header attaching unit 25 receives packets from the accumulation buffers 21A and 21B. Then, the header attaching unit 25 attaches the information on the management ID acquired from the management ID creating unit 24 to the header of the received packet. Furthermore, the header attaching unit 25 attaches the information on the issue source and the information on the destination to the header of the received packet.

The accumulation buffer 41 in the switch 4 accumulates P/C packets in the virtual channel 411 and accumulates NP packets in the virtual channel 412. At this point, the accumulation buffer 41 accumulates each of the packets without distinguishing the issue source.

The side buffer 42 acquires the destination, the issue source, and the management ID from the header of each NP packet received by the virtual channel 412 and then accumulates the acquired information by associating the acquired information with the identification information on each NP packet. When the side buffer 42 receives a notification from the arbitrating unit 44 indicating that the top NP packet in the virtual channel 412 has been output, the side buffer 42 deletes the information on the top NP packet.

The management ID retaining circuit 431 receives, from the arbitrating unit 44, the information on the management ID of the packet output from the accumulation buffer 41 together with the information on the issue source and the destination. Then, the management ID retaining circuit 431 retains, for each combination of the source and the destination of a packet, the management ID of the immediately previous packet.

The management ID comparator circuit 432 receives, from the arbitrating unit 44, a request for determining whether an NP packet can be output. Then, the management ID comparator circuit 432 acquires, from the side buffer 42, information on the issue source, destination, and the management ID of the top NP packet. Furthermore, the management ID comparator circuit 432 acquires, from the management ID retaining circuit 431, information on the management ID of an immediately previous packet that is associated with the combination of the issue source and the destination of the top NP packet. Then, the management ID comparator circuit 432 compares the management ID of the top NP packet with the value obtained by adding 1 to the management ID acquired from the management ID retaining circuit 431.

If the management ID of the top NP packet is greater than a value obtained by adding 1 to the management ID acquired from the management ID retaining circuit 431, the management ID comparator circuit 432 determines that the top NP packet can be output. In contrast, if the management ID of the top NP packet is less than a value obtained by adding 1 to the management ID acquired from the management ID retaining circuit 431, the management ID comparator circuit 432 determines that the top NP packet is not able to be output. Then, the management ID comparator circuit 432 outputs the determination result to the arbitrating unit 44.

If an NP packet is present in the virtual channel 412, the arbitrating unit 44 requests the management ID comparator circuit 432 to determine whether the top NP packet can be output. If the management ID comparator circuit 432 determines that the top NP packet can be output, the arbitrating unit 44 outputs the NP packet from the accumulation buffer 41.

In contrast, if the management ID comparator circuit 432 determines that the top NP packet is not able to be output and if the P/C packet is present in the virtual channel 411, the arbitrating unit 44 outputs a P/C packet from the accumulation buffer 41. If the P/C packet is not present in the virtual channel 411, the arbitrating unit 44 waits until a P/C packet is accumulated in the virtual channel 411.

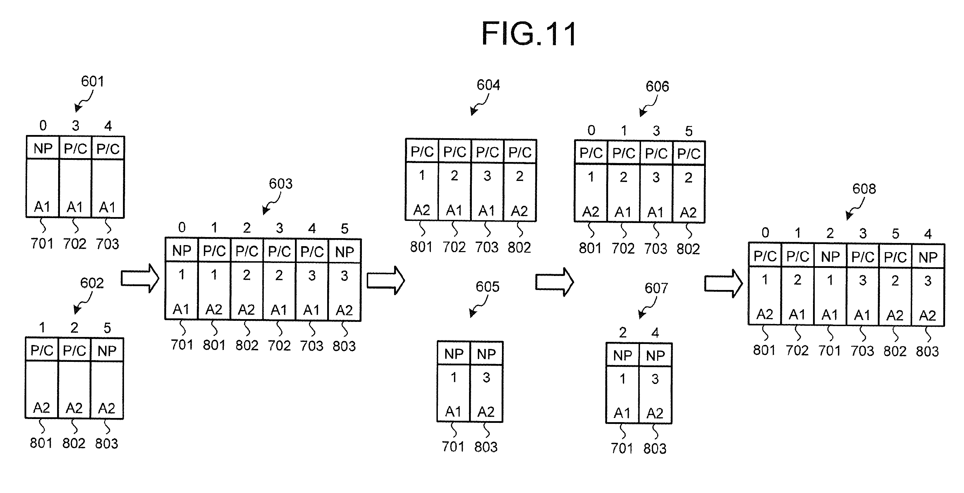

In the following, an overall flow of packet transmission performed by the data communication system according to the second embodiment will be described with reference to FIG. 11. FIG. 11 is a schematic diagram illustrating the overall flow of packet transmission performed by the data communication system according to the second embodiment. In this example, a description will be given of a case in which packets are sent from the PCIe devices 11 and 12 to a single destination. In FIG. 11, information on the issue source indicating the PCIe device 11 is represented by "A1" and information on the issue source indicating the PCIe device 12 is represented by "A2".

A state 601 indicates the state of the packets issued by the PCIe device 11. A state 602 indicates the state of the packets issued by the PCIe device 12. Each packet is represented by a frame. In this example, the symbols illustrated in the upper portion of packets 701 to 703 and 801 to 803 represent the types of packets. Furthermore, the symbols illustrated in the lower portion in the packets 701 to 703 and 801 to 803 represent the issue source ID. In the state 601 in which packets are issued by the PCIe device 11, the packet 701, which is an NP packet, is located at the top; then the packet 702, which is a P/C packet, is located subsequent to the packet 701; and then the packet 703, which is a P/C packet, is located at the end. Furthermore, in the state 602 in which packets are issued by the PCIe device 12, the packet 801, which is a P/C packet, is located at the top; the packet 802, which is a P/C packet, is located subsequent to the packet 801; and then the packet 803, which is an NP packet, is located at the end. The symbol "A1" that is information indicating that the PCIe device 11 is the issue source is attached to each of the packets 701 to 703. Furthermore, the symbol "A2" that is information indicating that the PCIe device 12 is the issue source is attached to each of the packets 801 to 803.

Furthermore, in FIG. 11, the order the packets are issued is illustrated above the frame that indicates a packet. In this example, packets are issued in the order of the packets 701, 801, 802, 702, 703, and 803.

A state 603 indicates the state of the packet that is output from the switch 2. In the switch 2, the header attaching unit 25 sequentially allocates a management ID to each of the packets. The numbers in the upper portion in the lower box in the packets 701 to 703 and 801 to 803 indicate the management IDs allocated to the packets. In this example, "1" is allocated, as the management ID, to the packet 701 that is the first packet issued by the PCIe device 11; "2" is allocated, as the management ID, to the packet 702 that is subsequent to the packet 701; and "3" is allocated, as the management ID, to the packet 703 that is subsequent to the packet 702. Furthermore, "1" is allocated, as the management ID, to the packet 801 that is the first packet issued by the PCIe device 12; "2" is allocated, as the management ID, to the packet 802 that is subsequent to the packet 801; and "3" is allocated, as the management ID, to the packet 803 that is subsequent to the packet 802.

A state 604 indicates the state of the packets passing through the virtual channel 31 in the crossbar switch 3. A state 605 indicates the state of the packets passing through the virtual channel 32 in the crossbar switch 3. The packets 702, 703, 801, and 802, which are P/C packets, pass through the virtual channel 31. Furthermore, the packets 701 and 803, which are NP packets, pass through the virtual channel 32.

A state 606 indicates the state of the packets accumulated in the virtual channel 411 in the accumulation buffer 41 in the switch 4. Furthermore, a state 607 indicates the state of the packets accumulated in the virtual channel 412 in the accumulation buffer 41 in the switch 4. The virtual channel 411 accumulates the packets 801, 702, 703, and 802, which are P/C packets. Furthermore, the virtual channel 412 accumulates the packets 701 and 803, which are NP packets.

At this point, due to the state of the virtual channel 31 and the virtual channel 32 in the crossbar switch 3, the packets 701 to 703 and 801 to 803 arrive at the switch 4 in the order different from the order of the packets that are issued by the PCIe devices 11 and 12. Specifically, the packets 701 to 703 and 801 to 803 arrive at the switch 4 in the order of the packets 801, 702, 701, 703, 803, and 802.

The packet 801 arrives at the switch 4 first by overtaking the packet 701. Because the packet 801 is a P/C packet, the arbitrating unit 44 can output the packet 801. Thus, the arbitrating unit 44 outputs the packet 801 from the accumulation buffer 41.

Then, the packet 702 arrives at the switch 4. Because the packet 702 is a P/C packet, the arbitrating unit 44 can output the packet 702. Thus, the arbitrating unit 44 outputs the packet 702 from the accumulation buffer 41. At this point, the packet 702 has arrived at the switch 4 by overtaking the packet 701. This is done on the basis of the ordering constraint in which a Posted packet and a Completion packet can overtake a Non-Posted packet.

Then, the packet 701 arrives at the switch 4. Because the packet 701 is an NP packet, the arbitrating unit 44 requests the management ID comparator circuit 432 to determine whether the NP packet can be output. In this case, the management ID of the packet 701 is "1". Furthermore, because the packet 702 is output from the accumulation buffer 41 as the packet issued by the PCIe device 11, the management ID of the immediately previous packet from among the packets issued by the PCIe device 11 is "2". In this case, because the management ID of the top NP packet is "1" and is less than the value obtained by adding 1 to the management ID acquired from the management ID retaining circuit 431, the management ID comparator circuit 432 determines that the top NP packet can be output. In response to this, the arbitrating unit 44 outputs the packet 702 from the accumulation buffer 41.

Then, the packet 703 arrives at the switch 4. Because the packet 703 is a P/C packet, the arbitrating unit 44 can output the packet 703. Thus, the arbitrating unit 44 outputs the packet 702 from the accumulation buffer 41.

Then, the packet 803 overtakes the packet 802 and arrives at the switch 4. Because the packet 803 is an NP packet, the arbitrating unit 44 requests the management ID comparator circuit 432 to determine whether the NP packet can be output. In this case, the management ID of the packet 803 is "3". Furthermore, because the packet 801 is output from the accumulation buffer 41 as the packet issued by the PCIe device 12, the management ID of the immediately previous packet from among the packets issued by the PCIe device 12 is "1". In this case, because the management ID of the top NP packet is "3" and is greater than the value obtained by adding 1 to the management ID acquired from the management ID retaining circuit 431, the management ID comparator circuit 432 determines that the NP packet is not able to be output. In response to this, the arbitrating unit 44 waits for an arrival of a subsequent P/C packet without outputting the packet 803 from the accumulation buffer 41. The reason for this is because the packet 803 is not able to be output due to the ordering constraint in which a Non-Posted packet is not supposed to overtake a Posted packet nor a Completion packet.

Then, the packet 802 arrives at the switch 4. Because the packet 802 is a P/C packet, the arbitrating unit 44 can output the packet 802. Therefore, the arbitrating unit 44 outputs the packet 802 from the accumulation buffer 41.

Thereafter, because the packet 803 is present in the virtual channel 412, the arbitrating unit 44 requests the management ID comparator circuit 432 to determine whether the NP packet can be output. In this case, the management ID of the packet 803 is "3". Furthermore, the packet 802 has been output from the accumulation buffer 41 as the packet issued by the PCIe device 12, the management ID of the immediately previous packet from among the packets issued by the PCIe device 12 becomes "2". In this case, because the management ID of the top NP packet is "3" and is less than the value obtained by adding 1 to the management ID acquired from the management ID retaining circuit 431, the management ID comparator circuit 432 determines that the top NP packet can be output. In response to this, the arbitrating unit 44 outputs the packet 803 from the accumulation buffer 41.

With the processes described above, the switch 4 outputs the packets 701 to 703 and 801 to 803 in the order indicated by a state 608. At this point, the packets issued by the PCIe devices 11 and 12 indicated in the state 608 are arranged in the order that obeys the ordering constraint.

As described above, the data communication system according to the second embodiment, the transmission side switch attaches, for each combination of the issue source and the destination of a packet, the management ID that is the sequence number. Then, the reception side switch outputs a packet when the management ID of the top NP packet is less than the value obtained by adding 1 to the management ID of the immediately previous packet with the combination of the issue source and the destination of the top NP packet. Consequently, the data communication system and the switching device according to the second embodiment can send PCIe packets while obeying the ordering constraint.

### [c] Third Embodiment

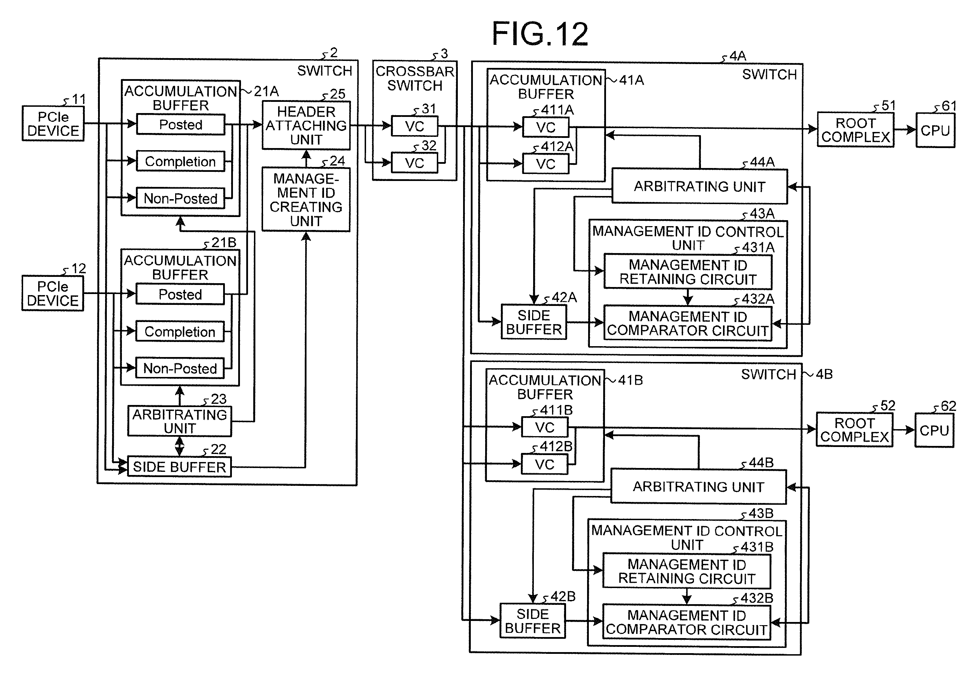

FIG. 12 is a block diagram illustrating a data communication system according to a third embodiment. The data communication system according to the third embodiment differs from the second embodiment in that multiple root complexes are used on the reception side of a PCIe packet. In a description below, components having the same function as that performed in the second embodiment will no be described. CPUs 61 and 62 correspond to the CPU6 in FIG. 1, respectively.

The data communication system according to the third embodiment includes two switches, i.e., switches 4A and 4B.

The crossbar switch 3 sends a packet issued by the PCIe device 11 to the switch 4A that is connected to a root complex 51. Furthermore, the crossbar switch 3 sends a packet issued by the PCIe device 12 to the switch 4B that is connected to a root complex 52.

The switch 4A receives the packet from the crossbar switch 3. Then, an accumulation buffer 41A in the switch 4A accumulates a P/C packet in a virtual channel 411A and accumulates an NP packet in a virtual channel 412A.

Then, an arbitrating unit 44A requests a management ID comparator circuit 432A to determine whether the NP packet can be output; arbitrates, in accordance with the determination result, the outputting of the packet; and then outputs the packet from the accumulation buffer 41A.

The management ID comparator circuit 432A compares the management ID of the top NP packet with the management ID of the immediately previous packet in the same combination of the issue source and the destination as that of the top NP packet and then determines whether the top NP packet can be output.

The switch 4B has the same function as that performed by the switch 4A.

In this embodiment, side buffers 42A and 42B correspond to the side buffer 42 in FIG.1, respectively. Management ID control units 43A and 43B correspond to the management ID control unit 43 in FIG.1, respectively. Management ID retaining circuits 431A and 431B correspond to the management ID retaining circuit 431 in FIG.1, respectively. An accumulation buffer 41B, virtual channels 411B and 412B, an arbitrating unit 44B, and a management ID comparator circuit 432B correspond to the accumulation buffer 41, the virtual channels 411 and 412, the arbitrating unit 44, and a management ID comparator circuit 432 in FIG.1, respectively.

As described above, even if multiple transmission side switches and multiple reception side switches are used, the data communication system and the switching devices according to the third embodiment can send PCIe packets while obeying the ordering constraint.

Furthermore, a description has been given of a case in which a PCIe packet is sent via the crossbar switch 3; however, the embodiment is not limited thereto. For example, even with a configuration in which the crossbar switch 3 is not installed and multiple virtual channels are used inside a PCIe packet switch, the functions described above can be provided, and thus the same effect can be implemented.

Furthermore, in the embodiments described above, a description has been given of a case in which two virtual channels are used; however, multiple virtual channels may also be used. In such a case, a reception side switch compares, for each destination, the management ID of an NP packet to be output with the management ID of an immediately previous packet, and thus the same effect can be obtained.

Furthermore, in the embodiments described above, a Posted packet and a Completion packet are send by using the same virtual channel; however, different paths may also be used for the Posted packet and the Completion packet. In such a case, by comparing the management ID of an NP packet to be output with the management ID of an immediately previous packet, the same effect can be obtained.

According to an aspect of an embodiment of the switching device, the packet control method, and the data communication system disclosed in the present invention, an advantage is provided in that it is possible to obey the ordering constraint.

## Claims

1. a switching device comprising:
a number attaching unit (24) that attaches, for each destination of a plurality of packets, a number to each of the packets in the order the packets are sent, the packets having a plurality of types;
a sending unit (25) that sends, via a plurality of paths (31,32) in accordance with the types of the packets, the packets to each of which the number is attached by the number attaching unit (24);
an accumulating unit (41) that receives the packets sent by the sending unit (25) and accumulates the packets; and
an output unit (43,44) that determines, on the basis of the number, whether a specific type of packet is allowed to be output, that decides the order the packets are output, and that outputs the packets from the accumulating unit (41).

2. The switching device according to claim 1, wherein
the paths (31,32) includes a first path and a second path,
the number attaching unit (24) attaches, for each destination of a first type packet and a second type packet that is prohibited to overtake the first type packet, a number to each of the first type packet and the second type packet in the order the first type and second type packets are sent,
the sending unit (25) sends the first type packet via the first path and sends the second type packet via the second path,
the accumulating unit (41) receives the first type packet and the second type packet that are sent by the sending unit (25) and accumulates the first type packet and the second type packet, and
the output unit (43,44) determines, on the basis of the number attached to the packets for each destination, whether the second type packet is allowed to be output and decides the order the packets are output.

3. The switching device according to claim 2, wherein
the number attaching unit (24) attaches a number to each of the first type packet and the second type packet such that the number becomes a sequence number in the order the first type and second type packets are sent, and
when the number attached to a second type packet to be output is less than a value obtained by adding 1 to the number attached to a packet that has immediately previously been output to the same destination as that of the second type packet, the output unit (43,44) determines that the second type packet is allowed to be output.

4. The switching device according to any one of claims 1 to 3, wherein the accumulating unit (41) accumulates, in different areas in the order the packets are received, the specific type of the packet and a packet other than the specific type of the packet.

5. The switching device according to any one of claims 1 to 4, wherein
the number attaching unit (24) attaches, for each combination of the destination and the issue source of the packet, the number in the order the packets are sent, and
the output unit (43,44) determines, on the basis of the number attached for each combination of the destination and the issue source of the packet, whether the specific type of the packet is allowed to be output.

6. A packet control method comprising:
attaching, for each destination of a plurality of packets, a number to each of the packets in the order the packets are sent, the packets having a plurality of types;
sending, via a plurality of paths (31,32) in accordance with the types of the packets, the packets to each of which the number is attached;
receiving the packets sent at the sending and accumulating the packets in a buffer (41); and
determining, on the basis of the number, whether a specific type of packet is allowed to be output, deciding the order the packets are output, and outputting the packets from the buffer (41).

7. A data communication system comprising:
a sending device (1);
a transmission side switch (2);
a crossbar switch (3);
a reception side switch (4); and
a receiving device (6), wherein
the sending device (1) includes
a packet sending unit (11,12) that sends a first type packet and a second type packet by using a first protocol,
the transmission side switch (3) includes
a number attaching unit (24) that attaches, for each destination of the first type packet and the second type packet, a number to each of the first type packet and the second type packet in the order the first type and second type packets are sent, and
a sending unit (25) that converts the first type packet and the second type packet, to each of which the number is attached by the number attaching unit (24), to the form of a second protocol and sends the converted first type packet and the converted second type packet,
the crossbar switch (3) includes
a first path (31) that sends the first type packet sent by the sending unit (25) by using the second protocol, and
a second path (32) that sends the second type packet sent by the sending unit (25) by using the second protocol,
the reception side switch (4) includes
an accumulating unit (41) that receives the first type packet and the second type packet sent by the crossbar switch (3) and accumulates the received packets, and
an output unit (44) that determines, on the basis of the number, whether the second type packet is allowed to be output, that decides the order the packets are output, that converts the first type packet or the second type packet to the form of the first protocol, and that outputs the packets from the accumulating unit in accordance with the order the packets are output, and
the receiving device (6) includes
a packet receiving unit that receives the first type packet and the second type packet from the receiving unit by using
the first protocol.
